# EUROPÄISCHE PATENTSCHRIFT

(11) **EP 1 342 390 B1**
(45) Veröffentlichungstag und Bekanntmachung des Hinweises auf die Patenterteilung: **15.05.2013**
(21) Anmeldenummer: 01980156.2
(22) Anmeldetag: 24.08.2001
(51) Int. Cl.: H04R 5/04

(54) **VERFAHREN ZUR WIEDERGABE VON AUDIOSIGNALEN MINDESTENS ZWEIER VERSCHIEDENER QUELLEN**
METHOD FOR REPRODUCING AUDIO SIGNALS OF AT LEAST TWO DIFFERENT SOURCES
PROCEDE DE REPRODUCTION DE SIGNAUX AUDIO PROVENANT D'AU MOINS DEUX SOURCES DIFFERENTES

(30) Priorität: 01.09.2000 DE 10043090
(43) Veröffentlichungstag der Anmeldung: 10.09.2003
(73) Patentinhaber: ROBERT BOSCH GMBH, 70442 Stuttgart (DE)
(72) Erfinder: GIERSE, Berthold, 85049 Ingolstadt (DE)
(86) Internationale Anmeldenummer: PCT/DE2001/003228
(87) Internationale Veröffentlichungsnummer: WO 2002/019762

(56) Entgegenhaltungen:
- DE-C- 4 106 927
- PATENT ABSTRACTS OF JAPAN vol. 017, no. 422 (P-1586), 5. August 1993 (1993-08-05) -& JP 05 081765 A (MATSUSHITA ELECTRIC IND CO LTD), 2. April 1993 (1993-04-02)
- PATENT ABSTRACTS OF JAPAN vol. 1999, no. 01, 29. Januar 1999 (1999-01-29) -& JP 10 282967 A (MATSUSHITA ELECTRIC IND CO LTD), 23. Oktober 1998 (1998-10-23)

## Beschreibung

### Stand der Technik

Die Erfindung geht von einem Verfahren zur Wiedergabe von Audiosignalen mindestens zweier verschiedener Quellen, wobei eine erste Lautstärke zur Wiedergabe von Audiosignalen einer ersten Quelle vorwählbar ist, nach der Gattung des unabhängigen Patentanspruchs aus.

Es sind Audioanlagen, beispielsweise in Form von Firma Blaupunkt-Werke GmbH, Hildesheim, DE, vertriebener Autoradiogeräte, bekannt, die Audiosignale verschiedener Quellen, beispielsweise eines Rundfunkempfängers oder eines Kompakt-Disc- oder Kompaktkassetten-Spielers wiedergeben können. Solche Audioanlagen ermöglichen die Wiedergabe der Audiosignale wahlweise entweder einer ersten Quelle, beispielsweise des Rundfunkempfängers, oder einer zweiten Quelle, wie beispielsweise des CD- oder CC-Spielers. Eine gleichzeitige Wiedergabe der Audiosignale verschiedener Quellen ist bei solchen Geräte nicht vorgesehen. So wird beispielsweise bei Wiedergabe einer CD oder CC im Falle einer mittels des Rundfunkempfängers empfangenen Verkehrsinformation die CD- oder CC-Wiedergabe unterbrochen, stattdessen die Verkehrsinformation wiedergegeben und anschließend die CD- oder CC-Wiedergabe fortgesetzt.

JP-05 081765 **offenbart eine Wiedergabeeinrichtung für Audiosignale zweier verschiedener Quellen, wobei die Signale der zweiten Quelle denen der ersten Quelle überlagert wiedergegeben werden können. Die Wiedergabelautstärke der Signale der zweiten Quelle kann dabei gesteuert werden.**

### Vorteile der Erfindung

Das erfindungsgemäße Verfahren mit den Merkmalen des unabhängigen Patentanspruchs hat demgegenüber den Vorteil,
eine gleichzeitige Wiedergabe der Audiosignale sowohl einer ersten, als auch mindestens einer zweiten Quelle zu ermöglichen, wobei aufgrund einer Wiedergabe der Audiosignale der zweiten Quellen mit gegenüber der Lautstärke der Audiosignale der ersten Quelle um mindestens eine Differenzlautstärke angehobenen Lautstärke eine gute Verständlichkeit der Audiosignale der mindestens zweiten Quelle erreicht wird.

Es ist weiter von Vorteil, neben der Wiedergabelautstärke für die Audiosignale der ersten Quelle eine Vorwahl der Differenzlautstärke zur Erhöhung der Wiedergabelautstärke der Audiosignale der zweiten Quelle zu ermöglichen. Damit kann der Benutzer die Differenzlautstärke seinen eigenen Bedürfnissen und Hörgewohnheiten anpassen.

**Die erfindungsgemäße Ausgestaltung** dahingehend, dass die Audiosignale der ersten Quelle mit der ersten Lautstärke und die Audiosignale der zweiten Quellen mit der zweiten Lautstärke wiedergegeben werden, wenn die zweite Lautstärke um mindestens die Differenzlautstärke größer als die erste Lautstärke ist,
und dass die Audiosignale der zweiten Quelle mit der zweiten Lautstärke und die Audiosignale der ersten Quelle mit einer gegenüber der zweiten Lautstärke um die Differenzlautstärke reduzierten Lautstärke wiedergegeben werden, wenn die Differenz zwischen zweiter und erster Lautstärke kleiner als
die Differenzlautstärke ist, hat den weiteren Vorteil, dass die Audiosignale der zweiten Quelle mit einer für angenehm befundenen zweiten Lautstärke wiedergegeben werden, gleichzeitig aber ein ausreichender Lautstärkeabstand zu den Audiosignalen der ersten Quelle besteht, so dass die Verständlichkeit der Audiosignale der zweiten Quelle gewährleistet bleibt. Dies ist inbesondere bei Abhören der Audiosignale der ersten Quelle mit einer ersten, hohen Lautstärke von Vorteil. In diesem Fall würde nämlich eine Anhebung der Lautstärke zur Wiedergabe der Audiosignale der zweiten Quelle möglicherweise als störend oder gar schmerzhaft empfunden. Die Vorgabe der zweiten Lautstärke schafft hier Abhilfe.

Es ist weiter ein Vorteil, neben der Wiedergabelautstärke für die Audiosignale der zweiten Quelle eine Vorwahl der Differenzlaustärke zur Absenkung der Wiedergabelautstärke der Audiosignale der ersten Quelle zu ermöglichen. Damit kann der Benutzer die Differenzlautstärke seinen eigenen Bedürfnissen und Hörgewohnheiten anpassen.

Es ist weiter von Vorteil, wenn die Differenzlautstärke aufgrund eines Soll-Istwert-Vergleichs eingeregelt wird. Damit sind Abweichungen der tatsächlichen Wiedergabelautstärken der Audiosignale der ersten und/oder der zweiten Quelle von den durch die entsprechenden Lautstärkesteller oder die Steuerung vorgegebenen Werten ausgleichbar, so dass die Differenzlautstärke stets eingehalten wird.

### Zeichnungen

Ausführungsbeispiele der Erfindung sind in den Zeichnungen dargestellt und werden nachfolgend näher erläutert. Gleiche Bezugszeichen in den Figuren bezeichnen gleiche oder funktionsgleiche Bestandteile.

### Es zeigen

Figur 1 ein Blockschaltbild eines ersten Ausführungsbeispiels einer erfindungsgemäßen Anordnung zur Durchführung des erfindungsgemäßen Verfahrens,
Figur 2 ein Blockschaltbild eines zweiten Ausführungsbeispiels einer erfindungsgemäßen Anordnung zur Durchführung des erfindungsgemäßen Verfahrens,

### Beschreibung der Ausführungsbeispiele

Figur 1 zeigt ein erstes Ausführungsbeispiel einer erfindungsgemäßen Audiosignalwiedergabevorrichtung zur Durchführung des erfindungsgemäßen Verfahrens. Beispielsweise handelt es sich dabei um ein Autoradio, welches über einen CD- oder Kompaktkassettenspieler und einen Rundfunkempfänger zum Empfang von Rundfunksignalen verfügt.

Die Audiosignal-Wiedergabevorrichtung 100 weist eine erste Audiosignalquelle, kurz erste Quelle 1, auf. Bei dieser ersten Quelle 1 handelt es sich im vorliegenden Fall des Autoradios um den CD- oder Kompaktkassettenspieler des Autoradios.

Das Audiosignal der ersten Quelle 1 wird über eine später näher beschriebene Mischerschaltung 9 einem steuerbaren ersten Verstärker 10 zur Verstärkung des Audiosignals zugeführt. Das Maß der Verstärkung des dem ersten Verstärker 10 zugeführten Audiosignals wird durch ein einem Steuereingang des ersten Verstärkers 10 zugeführtes Lautstärkesteuersignal bestimmt, das in einem ersten Lautstärkesteller 3 erzeugt wird. Durch Vorgabe des Lautstärkesteuersignals am ersten Lautstärkesteller 3 ist also eine erste Lautstärke zur Wiedergabe des Audiosignals der ersten Quelle 1 vorwählbar.

Die Audiosignal-Wiedergabevorrichtung weist weiterhin mindestens eine zweite Audiosignalquelle, kurz zweite Quelle 2, auf. Bei dieser zweiten Quelle handelt es sich im vorliegenden Fall des Autoradios beispielsweise um den Rundfunkempfänger, wobei dieser derart ausgestaltet ist, dass er bei aktiver Wiedergabe von Audiosignalen der ersten Quelle 1, also CD- oder CC-Wiedergabe, nur besonders gekennzeichnete Bestandteile des empfangenen Rundfunkprogramms, hier beispielsweise nur mittels einer im ARI- (Autofahrer Rundfunk Informations-) System vorgesehenen sogenannten Verkehrsdurchsagekennung DK oder einer im RDS (Radio Daten System) spezifizierten TA- (= Traffic Announcement) Kennung markierte Verkehrsdurchsagen, zur Wiedergabe durchschaltet. Die zweite Quelle 2 stellt also Audiosignale nur kurzzeitig in Form von gelegentlichen Verkehrs- oder Warndurchsagen zur Verfügung.

Das Audiosignal der zweiten Quelle 2 ist über einen später näher beschriebenen Vorverstärker 8 einem zweiten Eingang der Mischerschaltung 9 zugeführt, in der das Audiosignal der zweiten Quelle 2 dem der ersten Quelle 1 überlagert wird.

Somit wird die Überlagerung aus den Audiosignalen der ersten Quelle 1 und der zweiten Quelle 2 gemeinsam im ersten Verstärker 10 verstärkt und dem mindestens einen Lautsprecher 11 zur akustischen Wiedergabe zugeführt. Erfindungsgemäß weist die Audiosignal-Wiedergabevorrichtung 100 einen Differenzlautstärkesteller 4 auf, an dem eine Differenzlautstärke vorwählbar ist, um die eine Wiedergabe des Audiosignals der zweiten Quelle 2 gegenüber einer Lautstärke des Audiosignals der ersten Quelle 1 angehoben werden soll. Dem liegt die Überlegung zugrunde, dass vor dem Hintergrund einer laufenden Wiedergabe des Audiosignals der ersten Quelle 1, im Falle des beschriebenen Autoradios also einer CD- oder CC-Wiedergabe, gelegentlich vorliegende Audiosignale der zweiten Quelle 2, nämlich die genannten Verkehrs- oder Warndurchsagen, mit um die Differenzlautstärke angehobener Lautstärke wiedergegeben werden sollen, so dass deren Verständlichkeit auch vor dem Hintergrund der laufenden CD- oder CC-Wiedergabe gewährleistet ist.

Das Differenzlautstärkestellsignal des Differenzlautstärekestellers 4 ist einer Steuerschaltung 7 zugeführt, die aufgrund des Differenzlautstärkestellsignals und, wie nachfolgend beschrieben, weiterer Einflußgrößen, ein Steuersignal zur Ansteuerung des Vorverstärker 8 und zur Einstellung dessen Verstärkungsfaktors bestimmt.

Der Steuerschaltung 7 ist neben dem Differenzlautstärkestellsignal des Differenzlautstärekestellers 4 ein den Pegel des Audiosignals der ersten Quelle 1 anzeigendes Signal von einer ersten Pegelerfassungsschaltung 5 zugeführt. Die erste Pegelerfassungsschaltung 5 bestimmt aus dem ihr zugeführten, noch unverstärkten Audiosignal der ersten Quelle 1 dessen Signalpegel, beispielsweise mittels einer Gleichrichtung des Audiosignals und eines dieser nachgeschalteten Tiefpasses. Ebenso ist der Steuerschaltung 7 ein den Pegel des Audiosignals der zweiten Quelle anzeigendes Signal von einer zweiten Pegelerfassungschaltung 6 zugeführt. Die zweite Pegelerfassungsschaltung 6 ist analog der ersten Pegelerfassungsschaltung ausgeführt und bestimmt mittels einer Gleichrichtung und eines dieser nachgeschalteten Tiefpasses den Pegel des noch unverstärkten Audiosignals der zweiten Quelle 2. Im vorliegenden Fall eines nur vereinzelt auftretenden Audiosignals der zweiten Quelle 2 kann weiterhin vorgesehen sein, dass die zweite Pegelerfassungsschaltung 6 nur während des Vorliegens eines Audiosignals der zweiten Quelle 2 aktiv geschaltet ist, so dass Pausen im Audiosignal der zweiten Quelle 2 die Erfassung des Pegels des unverstärkten Audiosignals der zweiten Quelle 2 nicht beeinflussen.

Die Steuerschaltung 7 bestimmt den Verstärkungsfaktor des Vorverstärkers 8 derart, dass für eine am Differenzlautstärkesteller 4 zu null vorgewählte Differenzlautstärke die Pegel des unverstärkten Audiosignals der ersten Quelle 1 und des vorverstärkten Audiosignals der zweiten Quelle 2, die an den beiden Eingängen der Mischerschaltung 9 anstehen, gleich sind. Die Steuerschaltung 7 bestimmt das Vorverstärkeransteuersignal weiter so, dass für eine größer null vorgewählte Differenzlautstärke die Verstärkung des Vorverstärkers 8 einen Wert annimmt, demzufolge das am Ausgang des Verstärkers 10 anstehende Audiosignal der zweiten Quelle 2 eine um die Differenzlautstärke höhere Lautstärke aufweist, als das am Ausgang des Verstärkers 10 anstehende verstärkte Audiosignal der ersten Quelle 1.

Eine Variante der Steuerschaltung 7 bezieht sich auf eine Regelung des Pegels des der Mischerschaltung 9 zugeführten vorverstärkten Audiosignals der zweiten Quelle 2 aufgrund eines Soll-Istwert-Vergleichs anstelle einer einfachen Steuerung. Dazu ist der zweiten Pegelerfassungschaltung 6 anstelle des unverstärkten Audiosignals der zweiten Quelle 2 das mittels des Vorverstärkers 8 vorverstärkte Audiosignal der zweiten Quelle 2 zugeführt. Die Steuerfunktion der Steuerschaltung 7 zur Bildung des Vorverstärkersteuersignals ist für diese Modifikation entsprechend oben beschriebener Vorschriften anzupassen.

Die Mischerschaltung 9 dient der Überlagerung der Audiosignale der ersten Quelle 1 und der zweiten Quelle 2. Diese Überlagerung erfolgt vorzugsweise im Sinne einer einfachen Addition, so dass am Ausgang der Mischerschaltung 9 ein Summensignal aus den Audiosignalen der ersten Quelle 1 und der zweiten Quelle 2 , multipliziert mit dem Verstärkungsfaktor des Vorverstärkers, anliegt.

Die beschriebene Anordnung und damit das mit dieser realisierbare erfindungsgemäße Verfahren zur Wiedergabe von Audiosignalen mindestens zweier verschiedener Quellen funktioniert folgendermaßen.

Nach Vorwahl oder Einstellung einer ersten Lautstärke zur Wiedergabe der Audiosignale der ersten Quelle 1, also beispielsweise des CD- oder CC-Spielers, über den ersten Lautstärkesteller 3 verstärkt der erste Verstärker 10 das Audiosignal der ersten Quelle 1 nach Maßgabe der eingestellten ersten Lautstärke, so dass dieses mit der ersten Lautstärke über den mindestens einen Lautsprecher 11 wiedergegeben wird. Die Vorwahl oder Einstellung der ersten Lautstärke kann vorzugsweise bei laufender Wiedergabe des Audiosignals der ersten Quelle über einen herkömmlichen Lautstärkesteller 3 des Autoradios erfolgen.

Weiter wird nun die Differenzlautstärke am Differenzlautstärkesteller 4 vorgewählt. Dies kann werkseitig im Rahmen eines Probelaufs des Autoradiosgeräts oder über ein entsprechendes Bedienelement durch den Benutzer, vorzugsweise in einem Initialisierungsmodus des Geräts erfolgen. Dazu ist es von Vorteil, sowohl Audiosignale der ersten, wie auch der zweiten Quelle 2 wiederzugeben, so dass die Einstellung des Differenzpegels im Sinne einer Anpassung an die Hörgewohnheiten des Benutzers erfolgen kann. Stehen Audiosignale der zweiten Quelle 2, wie im Falle über Rundfunk empfangener Verkehrsinformationen, nicht regelmäßig zur Verfügung, können diese durch gespeicherte, für den Fall der Einstellung der Differenzlautstärke vorgehaltene, oder anderweitige Ersatz-Audiosignale simuliert werden.

Nach Einstellung der ersten Lautstärke für die Audiosignale der ersten Quelle 1 und der Differenzlautstärke werden die Audiosignale der zweiten Quelle 2 im Falle ihres Auftretens im Vorverstärker 8 nach Maßgabe des in der Steuerschaltung 7 erzeugten Vorverstärkersteuersignals derart verstärkt, dass diese mit einer gegenüber der ersten Lautstärke um die Differenzlautstärke erhöhten Lautstärke über den mindestens einen Lautsprecher 11 wiedergegeben werden.

Bei einem zweiten Ausführungsbeispiel der Erfindung ist demgegenüber vorgesehen, dass auch die Lautstärke für die Audiosignale der zweiten Quelle 2 vorgebbar ist.

Dazu ist eine modifizierte erfindungsgemäße Audiosignal-Wiedergabevorrichtung 200 derart ausgeführt, dass die Audiosignale der ersten Quelle 1 einem ersten steuerbaren Verstärker 10 zugeführt sind, während die Audiosignale der zweiten Quelle 2 einem zweiten steuerbaren Verstärker 12 zugeführt sind. Die Ausgangssignale der beiden Verstärker 10, 12, also die verstärkten Audiosignale der ersten Quelle 1 und der zweiten Quelle 2 werden in der Mischerschaltung 9, wie beschrieben, zusammengefaßt und über mindestens einen gemeinsamen Lautsprecher 11 wiedergegeben.

Die Verstärkung der Audiosignale der zweiten Quelle 2 mittels des zweiten Verstärkers 12 erfolgt nach Maßgabe einer an einem zweiten Lautstärkesteller 13 durch den Benutzer frei vorgebbaren zweiten Lautstärke.

Demgegenüber erfolgt die Verstärkung der Audiosignale der ersten Quelle 1 mittels des ersten Verstärkers 10 nach Maßgabe eines Steuersignals, das von der Steuerschaltung 7 aus dem Differenzlautstärkesignal des Differenzlautstärkestellers 4, der an dem ersten Lautstärkesteller 3 vorwählbaren ersten Lautstärke und die Pegel der Audiosignale der ersten Quelle 1 und der zweiten Quelle 2 anzeigender Signale erzeugt wird.

Zur Erfassung der Pegel der Audiosignale der ersten Quelle 1 und der zweiten Quelle 2 sind wiederum Pegelerfassungschaltungen 5 und 6 vorgesehen, die beim zweiten Ausführungsbeispiel die Pegel der verstärkten Audiosignale in beschriebener Weise durch Gleichrichtung und anschließende Tiefpassfilterung erfassen. Dies ermöglicht wiederum eine Regelung der Lautstärke der Audiosignale der zweiten Quelle 2 aufgrund einer Rückkopplung eines tatsächlich gemessenen Audiosignalpegels und damit eines Soll-Istwert-Vergleichs und eines entsprechend von der Steuerung 7 erzeugten Regelsignals. Wegen der gleichzeitigen Überwachung auch der Lautstärke des Audiosignals der ersten Quelle 1 unterliegt auch die Einhaltung der Differenzlautstärke einer Regelung.

Die Steuerung 7 ist bei diesem Ausführungsbeispiel derart ausgeführt, dass bei gleichzeitiger Wiedergabe der Audiosignale der ersten Quelle 1 und der zweiten Quelle 2
- die Audiosignale der ersten Quelle 1 mit der am ersten Lautstärkesteller 3 eingestellten ersten Lautstärke und die Audiosignale der zweiten Quelle 2 mit der am zweiten Lautstärkesteller 13 eingestellten zweiten Lautstärke wiedergegeben werden, wenn die zweite Lautstärke um mindestens die Differenzlautstärke größer als die erste Lautstärke ist,
- und die Audiosignale der zweiten Quelle 2 mit der am zweiten Lautstärkesteller 13 eingestellten zweiten Lautstärke und die Audiosignale der ersten Quelle 1 mit einer gegenüber der zweiten Lautstärke um die Differenzlautstärke reduzierten Lautstärke wiedergegeben werden, wenn die Differenz zwischen zweiter und erster Lautstärke kleiner als die Differenzlautstärke ist oder die erste Lautstärke größer als die zweite Lautstärke ist.

Die erwähnte Regelung der Differenzlautstärke wirkt sich derart aus, dass beispielsweise bei Abweichungen des Verstärkungsfaktors des zweiten Verstärkers 12 von dem durch den zweiten Lautstärkesteller 13 vorgegebenen Verstärkungsfaktor, beispielsweise infolge Begrenzungserscheinungen des Verstärkers bei hohen vorgewählten Werten der zweiten Lautstärke, die tatsächlich zu niedrige zweite Lautstärke durch die zweite Pegelerfassungsschaltung 6 erkannt wird, und die tatsächliche Wiedergabelautstärke der Audiosignale der ersten Quelle 1 entsprechend reduziert wird. Liegt nämlich die erste, vorgewählte Lautstärke um weniger als die Differenzlautstärke unter der am zweiten Lautstärkesteller 13 eingestellten zweiten vorgewählten Lautstärke, so wird, wie beschrieben, die tatsächliche Wiedergabelautstärke für das Audiosignal der ersten Quelle 1 auf einen Wert abgesenkt, der um die Differenzlautstärke unter der zweiten Lautstärke liegt. Liegt nun die tatsächliche Wiedergabelautstärke der Audiosignale der zweiten Quelle 2 aus beschriebenem Grund unter dem vorgewählten Wert, wird durch die Regelung die tatsächliche Wiedergabelautstärke für das Audiosignal der ersten Quelle 1 zusätzlich um diesen Fehlbetrag der zweiten Lautstärke reduziert, so dass der Lautstärkeabstand zwischen den tatsächlichen Wiedergabelautstärken der Audiosignale der ersten Quelle 1 und der zweiten Quelle 2 der Differenzlautstärke entspricht.

Anstelle der beschriebenen Ausführungsbeispiele mit einem CD- oder CC-Spieler als erster Quelle 1 und Rundfunk-, oder genauer, Verkehrsfunkempfänger als zweiter Quelle 2 sind auch andere Konstellationen von Audiosignalquellen möglich, nämlich beispielsweise eine erste Quelle 1 für ein Unterhaltungsprogramm und eine zweite Quelle 2 in Form eines akustische Fahranweisungen erzeugenden Fahrzeugnavigationsgeräts, denen aufgrund ihrer Bestimmung, einen Fahrzeugführer entlang einer Fahrtroute zu führen, höhere Priorität eingeräumt wird, als dem Unterhaltungsprogramm, und die daher im Falle ihres Auftretens vorrangig, hier also um mindestens die Differenzlautstärke lauter als das Unterhaltungsprogramm wiedergegeben werden müssen.

Weitere Konstellationen, die weiterhin nicht auf Fahrzeug-Audiowiedergabevorrichtungen beschränkt sein müssen, sind denkbar und liegen im Bereich der Erfindung.

Es ist weiterhin auch möglich, die Audiosignale der ersten und der zweiten Quelle über verschiedenen Lautsprecher wiederzugeben, ebenso, wie diese voneinander völlig unabhängig zu verarbeiten. Weiter ist es auch möglich, die tatsächlichen Wiedergabelautstärken der Signale der ersten und der zweiten Quelle mittels mindestens eines im Abstrahlbereich des oder der Lautsprecher angeordneten Mikrofons zu erfassen, wobei zur Pegelerfassung zweckmäßigerweise das jeweils andere als das zu prüfende Signal mittels eines geeigneten, beispielsweise adaptiven, Filters, dem sowohl das Mikrofonsignal, als auch das von der ersten 1, respektive zweiten Quelle 2 abgegebene Audiosignal zugeführt ist, aus dem Mikrofonsignal entfernt werden kann.

## Patentansprüche

1. Verfahren zur Wiedergabe von Audiosignalen mindestens zweier verschiedener Quellen, wobei eine erste Lautstärke zur Wiedergabe von Audiosignalen einer ersten Quelle vorwählbar ist,
wobei bei gleichzeitiger Wiedergabe der Audiosignale der ersten und der mindestens zweiten Quelle die Wiedergabe der Audiosignale der mindestens zweiten Quelle mit einer gegenüber der ersten Lautstärke mindestens um eine Differenzlautstärke erhöhten Lautstärke erfolgt,
wobei eine zweite Lautstärke zur Wiedergabe von Audiosignalen der zweiten Quelle vorwählbar ist,
wobei die Audiosignale der ersten Quelle mit der ersten Lautstärke und die Audiosignale der zweiten Quelle mit der zweiten Lautstärke wiedergegeben werden, wenn die zweite Lautstärke um mindestens die Differenzlautstärke größer als die erste Lautstärke ist,
und wobei die Audiosignale der zweiten Quelle mit der zweiten Lautstärke und die Audiosignale der ersten Quelle mit einer gegenüber der zweiten Lautstärke um die Differenzlautstärke reduzierten Lautstärke wiedergegeben werden, wenn die Differenz zwischen zweiter und erster Lautstärke kleiner als die Differenzlautstärke ist.

2. Verfahren nach Anspruch 1, **dadurch gekennzeichnet, dass** die Differenzlautstärke vorwählbar ist.

3. Verfahren nach einem der vorhergehenden Ansprüche, **dadurch gekennzeichnet, dass** die Differenzlautstärke aufgrund eines Soll-Istwert-Vergleichs eingeregelt wird.

4. Anordnung zur Wiedergabe von Audiosignalen mindestens zweier verschiedener Quellen mit Mitteln zur Durchführung des Verfahrens gemäß einem der vorhergehenden Ansprüche.

## Claims

1. Method for reproducing audio signals from at least two different sources, wherein a first volume for the reproduction of audio signals from a first source is preselectable,
wherein simultaneous reproduction of the audio signals from the first and from the at least second source involves the audio signals from the at least second source being reproduced at a volume which is increased by a differential volume in comparison with the first volume,
wherein a second volume for the reproduction of audio signals from the second source is preselectable,
wherein the audio signals from the first source are reproduced at the first volume and the audio signals from the second source are reproduced at the second volume when the second volume is higher by at least the differential volume than the first volume,
and wherein the audio signals from the second source are reproduced at the second volume and the audio signals from the first source are reproduced at a volume which is reduced by the differential volume in comparison with the second volume when the difference between the second and first volumes is less than the differential volume.

2. Method according to Claim 1, **characterized in that** the differential volume is preselectable.

3. Method according to either of the preceding claims, **characterized in that** the differential volume is adjusted on the basis of a setpoint/actual value comparison.

4. Arrangement for reproducing audio signals from at least two different sources having means for carrying out the method according to one of the preceding claims.

## Revendications

1. Procédé de reproduction de signaux audio provenant d'au moins deux sources différentes, un premier volume de reproduction de signaux audio d'une première source pouvant être présélectionné ;
en cas de reproduction simultanée des signaux audio de la première et la deuxième source au moins, la reproduction des signaux audio de la deuxième source au moins se produisant à un volume accru par rapport au premier volume d'au moins une différence de volume ;
un deuxième volume de reproduction des signaux audio de la deuxième source pouvant être présélectionné ;
les signaux audio de la première source étant reproduits au premier volume et les signaux audio de la deuxième source étant reproduits au deuxième volume lorsque le deuxième volume dépasse le premier volume d'au moins la différence de volume ; et
les signaux audio de la deuxième source étant reproduits au deuxième volume et les signaux audio de la première source étant reproduits à un volume réduit par rapport au deuxième volume de la différence de volume lorsque la différence entre le deuxième et le premier volume est inférieure à la différence de volume.

2. Procédé selon la revendication 1, **caractérisé en ce que** la différence de volume peut être présélectionnée.

3. Procédé selon l'une quelconque des revendications précédentes, **caractérisé en ce que** la différence de volume est réglée sur la base d'une comparaison valeur réelle-théorique.

4. Agencement de reproduction de signaux audio d'au moins deux sources différentes doté de moyens de mise en oeuvre du procédé selon l'une quelconque des revendications précédentes.
